# EUROPÄISCHE PATENTSCHRIFT

(11) **EP 0 590 448 B1**
(45) Veröffentlichungstag und Bekanntmachung des Hinweises auf die Patenterteilung: **11.12.1996**
(21) Anmeldenummer: 93115047.8
(22) Anmeldetag: 18.09.1993
(51) Int. Cl.: G01P 21/02, G01P 13/00

(54) **Verfahren zum Kalibrieren eines kalorimetrischen Strömungswächters**
Method for calibrating a calorimetric fluid flow monitor
Procédé d'étalonnage d'un contrôleur de débit de type calorimétrique

(30) Priorität: 02.10.1992 DE 4233290; 29.10.1992 DE 4236559
(43) Veröffentlichungstag der Anmeldung: 06.04.1994
(73) Patentinhaber: Kobold, Klaus, Belleair Shore, FL 34635 (US)
(72) Erfinder: Willner, Jürgen, c/o KEIL & SCHAAFHAUSEN, D-60322 Frankfurt am Main (DE); Steilen, Kurt, c/o KEIL & SCHAAFHAUSEN, D-60322 Frankfurt am Main (DE)
(74) Vertreter: Keil, Rainer A., Dipl.-Phys. Dr.

(56) Entgegenhaltungen:
- EP-A- 0 274 573
- EP-A- 0 330 915
- DE-A- 3 429 729
- EXPERIMENTS IN FLUIDS Bd. 8, Nr. 5 , 1. Februar 1990 , BERLIN Seiten 257 - 262 XP113890 DÖBBELING ET AL 'COMPUTER-AIDED CALIBRATION AND MEASUREMENTS WITH A QUADRUPLE HOTWIRE PROBE'

## Beschreibung

Die Erfindung bezieht sich auf ein Verfahren zum Kalibrieren eines kalorimetrischen Strömungswächters auf ein zu messendes Medium, mit einem einen temperaturabhängigen Widerstand bildenden Sensorelement, welches mittels elektrischer Stromwärme kurzzeitig erhitzt und dessen ein Maß für die Strömungsgeschwindigkeit eines an dem Sensorelement vorbeiströmenden Mediums darstellende Widerstandsänderung gemessen wird, wobei für ein vorgegebenes Medium der Widerstandswert R₀ bei Strömung 0 und der Widerstandswert Rₘₐₓ bei maximaler Strömung einen vorgegebenen Meßbereich Rₘₐₓ - R₀ festlegen.

Medien, deren Strömungsgeschwindigkeit mit einem kalorimetrischen Strömungswächter gemessen werden sollen, haben unterschiedliche Wärmekapazität bzw. unterschiedliche Wärmeleitfähigkeit. Handelsübliche kalorimetrische Strömungswächter haben daher für ein vorgegebenes Medium, also bspw. Wasser oder öl, eine charakteristische Kennlinie und die elektrische Schaltung ist so ausgelegt, daß im günstigsten Fall bei Strömung 0 der unterste Wert der Meßwertskala und bei maximaler Strömung der oberste Wert der Meßwertskala, also des Meßbereiches, eingenommen wird. Auf diese Weise wird erreicht, daß sämtliche auftretenden Strömungsgeschwindigkeiten eine Anzeige innerhalb der Meßwertskala ergeben und innerhalb dieses Bereiches auch ein Schaltpunkt für die Anzeige eines Strömungs- oder Temperaturschwellenwertes des gemessenen Mediums gesetzt werden kann. Aufgrund dieser Umstände ist ein kalorimetrischer Strömungswächter immer nur für dasjenige Medium optimal einsetzbar, für welches er vom Hersteller ausgelegt worden ist. Der Hersteller weiß aber häufig nicht, welches Medium der Kunde den Strömungswächter einsetzen will. Ist das Gerät vom Hersteller z.B. auf Wasser eingestellt, kann es beim Kunden passieren, daß bei Messung eines anderen Mediums die Meßwertanzeige bereits bei Strömung Null anzeigt.

Es ist daher bereits vorgeschlagen worden, derartige kalorimetrische Strömungswächter mit Mitteln zu versehen, die eine gewisse Anpassung an das zu messende Medium durch Einstellung des Schaltpunktes für die Anzeige eines Strömungsschwellenwertes zulassen Siehe z.B. DE-A-3 429 729. Dies hat den Nachteil, daß für verschiedene zu messende Medien bis zur maximalen Strömungsgeschwindigkeit häufig nicht die volle Meßwertskala ausgenutzt wird, also bpsw. bei maximaler Strömungsgeschwindigkeit und einer LED-Anzeige nur ein Teil der Anzeigelämpchen aufleuchtet. Dabei wird ein Teil der Meßwertanzeige "verschenkt" bei entsprechender Verringerung der Genauigkeit der Anzeige. Auch kann es vorkommen, daß der Schaltpunkt, bei welcher das Überschreiten eines Schwellenwertes der Strömungsgeschwindigkeit signalisiert werden soll, nicht innerhalb des Teils der Meßwertskala liegt, welche für das bestimmte Medium bis zur maximalen Strömungsgeschwindigkeit überhaupt überstrichen wird.

Bei einem anderen bekannten Gerät ist ein zweites Potentiometer vorgesehen, welches von Hand so lange verdreht wird, bis bei maximaler Strömungsgeschwindigkeit auch der volle Anzeigebereich ausgenutzt wird, also bspw. bei einer LED-Anzeige sämtliche Anzeigelämpchen bei maximaler Strömungsgeschwindigkeit aufleuchten. Dies setzt jedoch nicht nur die Festlegung des Startwertes sondern auch die Festlegung des Endwertes von Hand voraus, eine umständliche Handhabung, welche mit der vorliegenden Erfindung vermieden werden soll.

Die Erfindung hat sich demnach zum Ziel gesetzt, ein Verfahren zum Kalbrieren eines kalorimetrischen Strömungswächters vorzuschlagen, welches für die unterschiedlichsten Medien eine optimale Meßwertanzeige liefert und auch eine beliebige Festlegung eines Schaltpunktes (Schwellenwertes) innerhalb der Meßwertskala zuläßt.

Diese Aufgabe wird bei einem Verfahren der eingangs genannten Art im wesentlichen dadurch gelöst, daß man für ein jeweils zu messendes, von dem vorgegebenen Medium abweichendes Medium mittels einer elektrischen Schaltung:
- den Widerstandswert Rₓ des Sensorelements bei Strömung 0 mißt,
- den Widerstandswert R_{y} des Sensorelements bei maximaler Betriebsströmung mißt, und
- den durch die Widerstandswerte Rₓ, R_{y} begrenzten Meßbereich R_{y} - Rₓ selbsttätig mit dem vom Hersteller für das vorgegebene Medium festgelegten Meßbereich Rₘₐₓ - R₀ nach Startwert und Endwert durch Verschiebung und Streckung zur Deckung bringt.

Auf diese Weise wird also erreicht, daß, obwohl der kalorimetrische Strömungswächter vom Herstelle nur für ein bestimmtes vorgegebenes Medium, bspw. Wasser oder Öl, ausgelegt ist, für welches er unter Ausnutzung seiner gesamten Meßwertskala arbeitet, in gleicher optimaler Weise auch für andere Medien eingesetzt werden kann, ohne daß es besonderer Manipulationen und Einstellung mittels Potentiometer bedarf.

Dieses Verfahren kann vorzugsweise so ausgeführt werden, daß man eine elektrische Schaltung verwendet, welche einen programmgesteuerten Mikrocontroller zur Speicherung und Verarbeitung der die Widerstandswerte R₀, Rₘₐₓ, Rₓ, R_{y} darstellenden Daten aufweist. Mit einer solchen Schaltung kann das erfindungsgemäße Verfahren schnell und sicher ausgeführt werden.

Vorzugsweise mißt man die Widerstandswerte Rₓ, R_{y} als Spannungswerte, indem durch das Sensorelement bei den jeweiligen Strömungsgeschwindigkeiten ein konstanter Meßstrom geschickt wird.

Um ein Signal zu erhalten, welches bspw. das Überschreiten oder Unterschreiten einer vorbestimmten Strömungsgeschwindigkeit und/oder Temperatur des Mediums anzeigt, kann eine Schaltung verwendet werden, die beim Überschreiten eines innerhalb des Meßbereiches gesetzten Schaltpunktes dieses Signal abgibt.

Zu diesem Zweck wird vorzugsweise mittels des programmgesteuerten Mikrocontrollers periodisch der Wert der Strömungsgeschwindigkeit bzw. der Temperatur des Mediums abgefragt, das so ermittelte Meßergebnis zu einer Trendanzeige verarbeitet (um dem Benutzer eine entsprechende Zwischeninformation zu liefern) und mit den vorgegebenen Schwellenwerten bzw. dem vorgegebenen Schwellenwert verglichen sowie bei deren Überschreiten ein Signal abgegeben. So kann bspw. bei Überwachung eines Kühlmittelkreislaufes das Unterschreiten einer notwendigen Strömungsgeschwindigkeit bzw. das Überschreiten einer kritischen Temperatur festgestellt und ein entsprechender Alarm gegeben werden.

Eine noch zuverlässigere Meßwertanzeige und Strömungsüberwachung erhält man dann, wenn eine Schaltung mit Temperaturkompensation für das gemessene Medium verwendet wird.

Bei Verwirklichung der Erfindung geht der Benutzer bspw. wie folgt vor, wobei auf das beigefügte Blockschaltbild verwiesen wird:

Der Benutzer füllt zunächst die Leitung, in welcher die Strömung überwacht werden soll und in dessen Wandung der kalorimetrische Strömungswächter vorgesehen ist, mit dem betreffenden Medium. Dann wird bei Strömung 0 eine sog. "SET"-Taste gedrückt, welche mit dem Mikrocontroller der Schaltung und dieser mit dem Sensorelement so zusammengeschaltet ist, daß der für Strömung 0 kennzeichnende Widerstandswert Rₓ selbsttätig bestimmt und in dem Mikrocontroller gespeichert wird. Dann stelllt der Benutzer die volle Betriebsströmung her und drückt erneut die "SET"-Taste mit der Wirkung, daß nunmehr der für maximale Betriebsströmung kennzeichnende Widerstandswert R_{y} in dem Mikrocontroller erfaßt und gespeichert wird. Die Differenz R_{y} - Rₓ legt den Meßbereich fest, welcher von dem Mikrocontroller nach Lage und Erstreckung erfaßt wird. Dieser Meßbereich kann bspw. je nach Medium einem Strömungsgeschwindigkeitsbereich von 0 bis 0,5 m/s, 0 bis 1,35 m/s, 0 bis 2 m/s oder 0 bis 4 m/s entsprechen. Mit Hilfe des Mikrocontrollers wird nun der Meßbereich R_{y} - Rₓ so verschoben und/oder gestreckt, daß der kalorimetrische Strömungswächter praktisch die gleiche Kennlinie aufweist, wie das ursprünglich vom Hersteller vorgegebene Medium, mit der Folge, daß nunmehr auch für das vom Benutzer ausgewählte Medium die Meßwertanzeige bei Strömung 0 am Anfang der Meßwertskala und die Meßwertanzeige bei maximaler Strömung am Ende der Meßwertskala liegt, so daß über den gesamten Meßbereich auch die gesamte Meßwertskala ausgenutzt wird. Der Schaltpunkt für die Signalisierung eines Gefahrenzustandes kann nun beliebig über die gesamte Meßwertskala gesetzt werden.

Die Messung des Widerstandswertes folgt nach dem Blockschaltbild durch kurzzeitiges Einschalten der Heizstufe, Einschalten der Konstantstromquelle während der Abkühlphase zur Bestimmung des Widerstandswertes bzw. der Änderung des Widerstandswertes des Sensorelements, welches dem zu messenden Medium zugeordnet ist, sowie Auswertung der entsprechenden Meßwerte.

Mit Hilfe eines in dem Mikrocontroller gespeicherten Programms werden periodisch die Werte für Strömungsgeschwindigkeit und/oder Temperatur über einen Analog-MUX (Multiplexer) abgefragt, die gewonnen Daten von analog in digital umgewandelt, die digitalen Daten dem Mikrocontroller zugeleitet und von diesem verarbeitet. Der Mikrocontroller ist dazu bestimmt und geeignet, eine Trendanzeige bspw. über Abfallen der Strömungsgeschwindigkeit und/oder Ansteigen der Temperatur zu liefern, sowie bei Überschreiten eines Schwellenwertes für Strömungsgeschwindigkeit und/oder Temperatur eines der beiden oder beide zugeordneten Relais auszulösen. Mit Hilfe der Relais kann bspw. eine Anlage, innerhalb welcher ein Kühlkreislauf überwacht wird, abgeschaltet werden, um einen weitergehenden Schaden zu vermeiden.

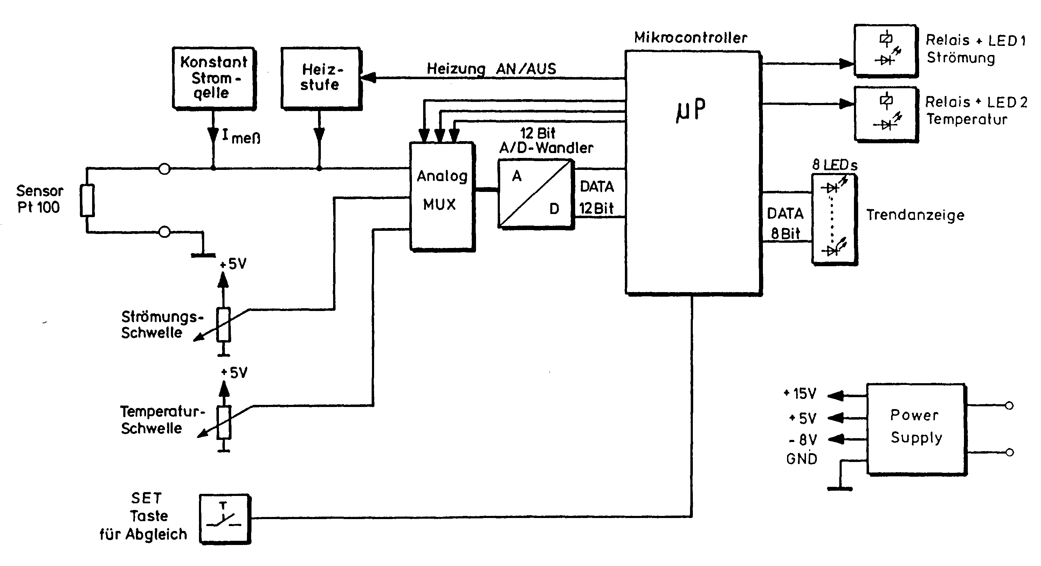

## Patentansprüche

1. Verfahren zum Kalibrieren eines kalorimetrischen Strömungswächters auf ein zu messendes Medium, mit einem einen temperaturabhängigen Widerstand bildenden Sensorelement, welches mittels elektrischer Stromwärme kurzzeitig erhitzt und dessen ein Maß für die Strömungsgeschwindigkeit eines an dem Sensorelement vorbeiströmenden Mediums darstellende Widerstandsänderung gemessen wird, wobei für ein vorgegebenes Medium der Widerstandswert R₀ bei Strömung 0 und der Widerstandswert Rₘₐₓ bei maximaler Strömung einen vorgegebenen Meßbereich Rₘₐₓ - R₀ festlegen, dadurch gekennzeichnet, daß man für ein jeweils zu messendes, von dem vorgegenen Medium abweichendes Medium mittels einer elektrischen Schaltung:
- den Widerstandswert Rₓ des Sensorelements bei Strömung 0 mißt,
- den Widerstandswert R_{y} des Sensorelements bei maximaler Betriebsströmung mißt, und
- den durch die Widerstandswerte Rₓ, R_{y} begrenzten Meßbereich R_{y} - Rₓ selbsttätig mit dem vorgegebenen Meßbereich Rₘₐₓ - R₀ nach Startwert und Endwert durch Verschiebung und Streckung zur Deckung bringt.

2. Verfahren nach Anspruch 1, dadurch gekennzeichnet, daß man eine elektrische Schaltung verwendet, welche einen programmgesteuerten Mikrocontroller zur Speicherung und Verarbeitung der die Widerstandswerte R₀, Rₘₐₓ, Rₓ, R_{y} darstellenden Daten aufweist.

3. Verfahren nach Anspruch 1 oder 2, dadurch gekennzeichnet, daß man die Widerstandswerte Rₓ, R_{y} als Spannungswerte mißt, indem durch das Sensorelement ein konstanter Meßstrom geschickt wird.

4. Verfahren nach einem der Ansprüche 1 bis 3, dadurch gekennzeichnet, daß man eine Schaltung verwendet, welche bei Überschreiten eines innerhalb des Meßbereiches gesetzten Schaltpunktes ein Signal abgibt.

5. Verfahren nach Anspruch 4, dadurch gekennzeichnet, daß der Schaltpunkt einen vorgegebenen Schwellenwert für Strömungsgeschwindigkeit oder Temperatur des Mediums darstellt.

6. Verfahren nach Anspruch 4 oder 5, dadurch gekennzeichnet, daß mittels des programmgesteuerten Mikrocontrollers periodisch der Wert der strömungsgeschwindigkeit bzw. der Temperatur des Mediums abgefragt, das Meßergebnis zu einer Trendanzeige verarbeitet und mit dem vorgegebenen Schwellenwert verglichen sowie bei deren Überschreiten ein Signal abgegeben wird.

7. Verfahren nach einem der Ansprüche 1 bis 6, dadurch gekennzeichnet, daß man eine Schaltung verwendet, welche eine Kompensation der Temperatur des gesamten Mediums vorsieht.

## Claims

1. Process for calibration of a calorimetric flow monitor on a medium to be measured, with a sensor element forming a temperature-dependent resistor which is heated for a short time bymeans of electric current heating effect and of which a resistance change is measured which represents a measurement of a flow speed of a medium flowing past the sensor element where for a given medium the resistance value R₀ at flow 0 and resistance Rₘₐₓ at maximum flow define a given measurement range Rₘₐₓ - R₀, characterized in that for a medium to be measured which differs from the given medium, by means of an electrical circuit:
- resistance value Rₓ of the sensor element is measured at flow 0,
- resistance value R_{Y} of the sensor element is measured at maximum flow, and
- the measurement range R_{Y} - Rₓ limited by resistance values Rₓ, R_{y} is automatically brought into alignment with the given measurement range Rₘₐₓ - R₀ by start value and end value by shifting and extension.

2. Process according to claim 1, characterized in that an electrical circuit is used which has a program-controlled microcontroller for storage and processing of the data representing the resistance values R₀, Rₘₐₓ, Rₓ and R_{y}.

3. Process according to claim 1 or claim 2, characterized in that the resistance values Rₓ, R_{y} are measured as voltage values as a constant measurement current is sent through the sensor element.

4. Process according to any of claims 1 to 3, characterized in that a circuit is used which emits a signal when a switch point within the measurement range is exceeded.

5. Process according to claim 4, characterized in that the switch point represents a preset threshold value for flow speed or temperature of the medium.

6. Process according to claim 4 or claim 5, characterized in that by means of the program-controlled microcontroller, the value of the flow speed or temperature of the medium is scanned periodically, the measurement result processed into a trend display and compared with the preset threshold value and a signal is given when this is exceeded.

7. Process according to any of claims 1 to 6, characterized in that a circuit is used which compensates for the temperature of the entire medium.

## Revendications

1. Procédé d'étalonnage d'un contrôleur de débit de type calorimétrique en fonction d'un milieu à mesurer, à l'aide d'un élément sensible qui forme une résistance dont la valeur ohmique varie en fonction de la température, que l'on chauffe électriquement pendant un court instant et dont on mesure la variation de résistance qui représente une indication pour la vitesse d'écoulement du milieu s'écoulant autour du capteur, la valeur de résistance R₀ pour un écoulement 0 et la valeur de résistance Rₘₐₓ pour un écoulement maximum délimitant une plage de mesure Rₘₐₓ-R₀ pour un milieu prédéterminé, caractérisé par le fait que pour un milieu à mesurer différent du milieu prédéterminé
- on mesure la valeur de résistance Rₓ de l'élément sensible pour l'écoulement 0,
- on mesure la valeur de résistance R_{y} de l'élément sensible pour l'écoulement maximum en service et
- par décalage et par étirement on amène automatiquement les valeurs de début et de fin de la plage de mesure R_{y} - Rₓ, délimitée par les valeurs de résistance Rₓ, R_{y}, en recouvrement avec celles de la plage de mesure prédéterminée Rₘₐₓ - R₀
à l'aide d'un circuit électrique.

2. Procédé selon la revendication 1, caractérisé par le fait que l'on utilise un circuit électrique pourvu d'un micro-contrôleur commandé par programme pour mémoriser et traiter les données représentant les valeurs de résistance R₀, Rₘₐₓ, Rₓ, R_{y}.

3. Procédé selon la revendication 1 ou 2, caractérisé par le fait que l'on mesure les valeurs de résistance Rₓ, R_{y} sous forme de tensions en faisant circuler un courant de mesure constant dans l'élément sensible.

4. Procédé selon l'une des revendications 1 à 3, caractérisé par le fait que l'on utilise un circuit qui délivre un signal en cas de dépassement d'un point de déclenchement déterminé à l'interieur de la plage de mesure.

5. Procédé selon la revendication 4, caractérisé par le fait que le point de déclenchement constitue un seuil prédéterminé pour la vitesse d'écoulement ou la température du milieu.

6. Procédé selon la revendication 4 ou 5, caractérisé par le fait qu'on lit périodiquement, à l'aide du micro-contrôleur, la valeur de la vitesse d'écoulement et de la température du milieu, on exploite le résultat de la mesure pour obtenir une indication de tendance et on le compare avec la valeur de seuil prédéterminée et on émet un signal en cas de dépassement de celle-ci.

7. Procédé selon l'une des revendications 1 à 6, caractérisé par le fait que l'on utilise un circuit qui prévoit une compensation de la température de tout le milieu.
